# EUROPÄISCHE PATENTSCHRIFT

(11) **EP 1 771 700 B1**
(45) Veröffentlichungstag und Bekanntmachung des Hinweises auf die Patenterteilung: **28.12.2011**
(21) Anmeldenummer: 05761609.6
(22) Anmeldetag: 16.07.2005
(51) Int. Cl.: F42B 10/66, F02K 9/90

(54) **STRAHLRUDER UND VERFAHREN ZUR HERSTELLUNG EINES STRAHLRUDERS**
STREAM DEFLECTOR AND METHOD FOR THE PRODUCTION OF A STREAM DEFLECTOR
DEVIATEUR DE JET ET PROCEDE POUR PRODUIRE CE DERNIER

(30) Priorität: 27.07.2004 DE 102004037487
(43) Veröffentlichungstag der Anmeldung: 11.04.2007
(73) Patentinhaber: Deutsches Zentrum für Luft- und Raumfahrt e.V., 53175 Bonn (DE)
(72) Erfinder: HEIDENREICH, Bernhard, 71679 Asperg (DE); ZUBER, Christian, 73663 Berglen (DE)
(74) Vertreter: Hoeger, Stellrecht & Partner Patentanwälte
(86) Internationale Anmeldenummer: PCT/EP2005/007761
(87) Internationale Veröffentlichungsnummer: WO 2006/010502

(56) Entgegenhaltungen:
- EP-A- 0 744 591
- EP-A- 0 744 591
- DE-A1- 19 632 893
- DE-A1- 19 632 893
- US-A- 5 380 475
- US-A- 5 380 475
- US-A- 6 151 887
- US-A- 6 151 887
- US-A1- 2002 130 216
- US-A1- 2002 130 216
- US-B1- 6 182 442
- US-B1- 6 182 442

## Beschreibung

Die Erfindung betrifft ein Strahlruder zum Einsatz in Heißgasströmungen.

Die Erfindung betrifft ferner ein Verfahren zur Herstellung eines Strahlruders aus einem mindestens in Teilbereichen faserverstärkten Werkstoff.

Aus der DE 196 32 893 A1 ist ein Flugkörper mit Strahlrudern bekannt, welche aus kohlenstofffaserverstärktem Siliciumcarbid und/oder kohlenstofffaserverstärktem Kohlenstoff und/oder siliciumcarbidfaserverstärktem Siliciumcarbid bestehen.

Aus der US 2002/0130216 A1 die einen Startpunkt für den Anspruch 1 bildet, ist ein auflösbares Strahlruder bekannt, welches einen Rahmen und eine thermische Schutzschicht aufweist, die auf dem Rahmen angeordnet ist.

Strahlruder werden auch als Strahlklappen oder Steuerruder bezeichnet. Sie werden in der Nähe eines Austrittsendes einer Düse insbesondere eines Fluggeräts angeordnet und dienen dazu, die Heißgasströmung unmittelbar vor dem Austritt zu beeinflussen, um damit das Fluggerät lenken zu können.

Insbesondere wenn feste Brennstoffe eingesetzt werden, können Strahlruder nicht nur heißen Gasen sondern auch korrosiven und/oder abrasiven Partikeln ausgesetzt sein.

Der Erfindung liegt die Aufgabe zugrunde, ein Strahlruder bereitzustellen, welches eine hohe Abrasionsbeständigkeit aufweist.

Diese Aufgabe wird erfindungsgemäß mit den Merkmalen gemäß Anspruch 1 gelöst.

Durch die im Wesentlichen parallele Ausrichtung der Fasern zur Flügeloberfläche wird verhindert, daß Faserstümpfe an der Flügeloberfläche liegen. Dies erhöht die Abrasionsbeständigkeit des Strahlruders.

Wenn Kurzfasern verwendet werden, dann läßt sich eine homogene Faserverteilung in dem Deckhautbereich erreichen. Die Kurzfasern lassen sich auch auf einfache Weise ausrichten, beispielsweise durch Pressung während der Herstellung. Insbesondere lassen sie sich im Wesentlichen parallel zur Flügeloberfläche ausrichten. Es lassen sich dadurch keramische Schichten wie SiC-Schichten an der Bauteiloberfläche ausbilden, die einen sehr hohen Abrasionswiderstand aufweisen. Auch bei der Verwendung von Langfasern bzw. von Gewebeverstärkungen lassen sich keramische Schichten an der Bauteiloberfläche ausbilden, die einen sehr hohen Abrasionswiderstand aufweisen.

(Unter Kurzfasern werden üblicherweise Fasern mit einer Länge bis 3 mm verstanden. Als Endlosfasern werden Fasern bezeichnet, die in der Form von Rovings oder Geweben verarbeitet werden und deren Länge konstruktionsbedingt ist oder durch die geometrische Abmessung des Bauteils bedingt ist. Langfasern haben in der Regel Faserlängen zwischen 3 mm und 50 mm.)

Günstig ist es, wenn unterschiedliche Bereiche des Flügels, welche unterschiedlichen Belastungen ausgesetzt sind, aus unterschiedlichen, den Belastungen angepaßten Werkstoffen hergestellt sind. Beispielsweise ist ein Bereich, welcher eine Flügeloberfläche ausbildet, einer hohen korrosiven und/oder abrasiven Belastung in einer Heißgasströmung ausgesetzt. Ein Schaft ist einer höheren mechanischen Belastung ausgesetzt. Durch entsprechende Anpassung läßt sich das Gesamtbauteil optimieren. Es ist beispielsweise auch möglich, "Gradientenwerkstoffe" einzusetzen, das heißt Materialien, bei denen sich die Eigenschaften beispielsweise in einer Richtung zu der Flügeloberfläche hin ändern. Beispielsweise kann durch entsprechende Faserbehandlung der Keramikgehalt räumlich gesteuert werden, so daß beispielsweise der Keramikgehalt zu der Flügeloberfläche hin zunimmt.

Bereiche, welche durch eine Heißgasströmung korrosiv und/oder abrasiv belastet sind, sind aus einem Werkstoff mit niedrigerer Faser-Matrix-Bindung (im CFK-Zustand) im Vergleich zu Bereichen, welche stärkeren mechanischen Belastungen ausgesetzt sind, hergestellt. Bei niedrigerer Faser-Matrix-Bindung läßt sich bei der Keramisierung ein höherer Keramikgehalt herstellen. Diese Bereiche weisen dann eine höhere Abrasionsbeständigkeit auf. Bereiche; welche mechanisch stärker belastet sind, sollten eine höhere Biegefestigkeit aufweisen. Dies wird dadurch erreicht, daß der Keramikgehalt geringer eingestellt wird. Die Einstellung des Keramikgehalts läßt sich über die thermische Vorbehandlung von Fasern und insbesondere C-Fasern oder SiC-Fasern erreichen. Durch die Verwendung von SiC-Fasern wird die Abrasionsbeständigkeit weiter erhöht.

Es ist ferner aus den gleichen Gründen günstig, wenn Bereiche, welche korrosiv und/oder abrasiv stärker belastet sind, aus einem Werkstoff mit höherem Keramikgehalt im Vergleich zu Bereichen, welche mechanisch stärker belastet sind, hergestellt sind.

Es kann vorgesehen sein, daß das Strahlruder einen Schaft aufweist, welcher mit dem Flügel verbunden ist. Über den Schaft läßt sich das Strahlruder an einer Düse drehbar lagern. Über den Schaft läßt sich beispielsweise eine Bolzenverbindung herstellen. Der Schaft kann integral mit dem Flügel verbunden sein oder ein getrenntes Teil sein, welches nachträglich am Flügel fixiert wird.

Günstigerweise liegt ein Schaftfortsetzungsbereich in dem Kernbereich des Flügels. Dadurch läßt sich eine sichere Fixierung des Schafts an dem Flügel erreichen, wobei die mechanische Belastung des Flügels, welche über den Schaft eingeleitet wird, optimal ableitbar ist.

Es ist besonders günstig, wenn der Schaft aus einem faserverstärkten Werkstoff hergestellt ist. Insbesondere ist er mittels Langfasern hergestellt, welche unidirektional sind, oder mittels Gewebelagen hergestellt. Es lassen sich dadurch optimiert mechanische Kräfte auffangen.

Ganz besonders vorteilhaft ist es, wenn Fasern im wesentlichen parallel zu einer Schaftlängsachse orientiert sind. Es kann sich dabei um unidirektionale (Lang-)Fasern handeln oder um Fasern in einem Gewebe.

Aus dem gleichen Grund ist es günstig, wenn ein Schaftfortsetzungsbereich (im Flügel) aus einem faserverstärkten Werkstoff hergestellt ist und insbesondere mittels unidirektionalen (Lang-)Fasern oder mittels eines Gewebes hergestellt ist. Der Schaft und der Schaftfortsetzungsbereich können integral hergestellt sein, indem beispielsweise Langfasern eingesetzt werden, die sowohl den Schaft als auch den Schaftfortsetzungsbereich durchsetzen.

Es ist dann auch vorteilhaft, wenn Fasern im Schaftfortsetzungsbereich im wesentlichen parallel zu einer Flügelachse orientiert sind.

Es hat sich als günstig erwiesen, wenn die Fasern in dem Deckhautbereich C-Fasern (Kohlenstofffiasern) oder SiC-Fasern sind.

Es ist ferner günstig, wenn der Deckhautbereich aus einem faserverstärkten Keramikmaterial hergestellt ist, wobei das faserverstärkte Keramikmaterial insbesondere C-Fasern umfaßt.

Insbesondere ist der Deckhautbereich aus C/C-SiC hergestellt, das heißt aus einer Siliciumcarbid-Keramik, welche durch Pyrolyse eines C/C-Vorkörpers und Silicierung hergestellt ist. Eine Herstellung aus SiC/SiC ist ebenfalls möglich.

Aus dem gleichen Grund ist es günstig, wenn der Schaft und/oder ein Schaftfortsetzungsbereich aus einem C-Fasern oder SiC-Fasern umfassenden Werkstoff hergestellt sind.

Ebenfalls ist es dann günstig, wenn der Schaft und/oder ein Schaftfortsetzungsbereich aus einem faserverstärkten Keramikmaterial hergestellt sind.

Insbesondere sind der Schaft und/oder ein Schaftfortsetzungsbereich aus C/C-SiC oder SiC/SiC hergestellt.

Günstig ist es, wenn der Flügel mit einer Hartstoffbeschichtung wie beispielsweise Borcabid versehen sind. Dadurch wird die Abrasionsbeständigkeit erhöht. Entsprechende Strahlruder und Beschichtungsverfahren sind in den nicht vorveröffentlichten deutschen Patentanmeldungen Nr. 10 2004 022 358.0 vom 30. April 2004 und Nr. 10 2004 008 452.1 vom 13. Februar 2004 des gleichen Anmelders beschrieben.

Es kann vorgesehen sein, daß der Kernbereich einen Schaftfortsetzungsbereich und einen Zwischenbereich umfaßt. Insbesondere ist der Zwischenbereich aus einem anderen Werkstoff hergestellt als der Schaftfortsetzungsbereich. Es läßt sich dadurch eine Art von Sandwichstruktur ausbilden mit optimierter Anpassung der Eigenschaften.

Beispielsweise ist der Zwischenbereich aus einem mit Kurzfasern faserverstärkten Werkstoff hergestellt. Über die Faserlänge der Kurzfasern lassen sich die Eigenschaften des Zwischenbereichs und damit des Strahlruders einstellen. Beispielsweise führen Kurzfasern zu einem höheren Abrasionswiderstand, während Langfasern zu höheren Festigkeiten führen. Durch die Verwendung von Langfasern im Zwischenbereich läßt sich eine höhere Festigkeit erreichen.

Es ist auch möglich, den Zwischenbereich aus einem monolithischen Keramikwerkstoff herzustellen. Ein solcher monolithischer Keramikwerkstoff läßt sich integral mit der Herstellung des Strahlruders herstellen. Dadurch sind nachträgliche Bearbeitungsschritte vermieden, wobei sich im Kernbereich eine hohe Abrasionsbeständigkeit und Steifigkeit ergibt.

Es kann vorgesehen sein, daß der Deckhautbereich mittels Gewebelagen hergestellt ist. Diese lassen sich so legen, daß die Fasern parallel zur Flügeloberfläche ausgerichtet sind.

Insbesondere umgeben die Gewebelagen den Kernbereich. Dadurch ergeben sich erweiterte Einstellungsmöglichkeiten für die Eigenschaften des Strahlruders, um diese zu optimieren: Für den Kernbereich können andere Werkstoffe eingesetzt werden als für den Deckhautbereich.

Es ist auch möglich, daß der Deckhautbereich mittels Kurzfasern hergestellt ist. Mit diesen läßt sich eine homogene Verteilung der Fasern im Deckhautbereich erreichen. Es lassen sich dadurch wiederum beispielsweise bei C/C-SiC-Werkstoffen SiC-Bereiche erreichen, welche eine hohe Abrasionsfestigkeit aufweisen. Damit wiederum ergibt sich ein Strahlruder mit hoher Abrasionsbeständigkeit.

Insbesondere sind die Kurzfasern im Deckhautbereich ausgerichtet. Sie sind dabei vorzugsweise im wesentlichen parallel zur Flügeloberfläche ausgerichtet. Kurzfasern lassen sich auf einfache Weise ausrichten, indem beispielsweise ein Preßvorgang in einem Zustand durchgeführt wird, in dem sich die Kurzfasern ausrichten können.

Der Erfindung liegt ferner die Aufgabe zugrunde, ein Verfahren der eingangs genannten Art bereitzustellen, welches auf einfache Weise durchführbar ist.

Diese Aufgabe wird erfindungsgemäß mit den Merkmalen gemäß Anspruch 24 gelöst.

Bei der endkonturnahen Strahlrudervorkörperherstellung lassen sich die nachfolgenden Schritte zur Herstellung der endgültigen Endkontur minimieren. Insbesondere läßt sich die Konturbearbeitung im Vorkörper-Zustand (beispielsweise an einem C/C-Vorkörper) und an einem Keramikkörper minimieren. Entsprechend ist der Zeitaufwand und der Kostenaufwand zur Herstellung eines Strahlrudervorkörpers verringert.

Durch Pressung lassen sich auch auf einfache Weise Kurzfasern ausrichten, so daß diese beispielsweise im Wesentlichen parallel zu einer Flügeloberfläche ausgerichtet sind. Dadurch wiederum erhält man eine hohe Abrasionsbeständigkeit.

Darüber hinaus müssen dann auch keine Schnittprozeduren quer zur Faserlängsrichtung durchgeführt werden. Solche Schnitte haben zur Folge, daß Faserenden auf die Bauteiloberfläche treffen. Dies wiederum verringert die Abrasionsbeständigkeit des Bauteils.

Es ist dadurch auch möglich, Einlegekerne zu verwenden. Beispielsweise können pyrolisierte Holzkerne verwendet werden, welche eine bestimmte Form aufweisen. Weiterhin lassen sich C/C-Kerne verwenden, wobei unterschiedliche Kerne beispielsweise durch Fügepaste miteinander verbunden werden. Über eine Deckhaut lassen sich die Einlegekerne verbinden, wobei eine solche Deckhaut als Verbindungsmittel beim Pressen entsteht. Die Deckhaut wiederum ist vorzugsweise gewebeverstärkt.

Durch das Pressen ist es möglich, Deckhautbereiche herzustellen, in welchen Fasern im wesentlichen parallel zur Flügeloberfläche orientiert sind, um so eine hohe Abrasionsbeständigkeit zu erzielen.

Durch das erfindungsgemäße Herstellungsverfahren lassen sich also Strahlruder mit hoher Abrasionsbeständigkeit zeitminimiert und kostenminimiert herstellen.

Unterschiedliche funktionelle Bereiche des Strahlruders werden mit einem den Erfordernissen des jeweiligen funktionellen Bereichs angepaßten Werkstoff hergestellt. Durch das Vorsehen eines Deckhautbereiches lassen sich für unterhalb des Deckhautbereichs liegende Bereiche unterschiedliche Werkstoffe einsetzen; dadurch ergeben sich vermehrte Einstellmöglichkeiten für die Eigenschaften des Strahlruders und insbesondere eine verbesserte Optimierbarkeit.

Es werden entsprechende Anforderungen für die jeweiligen funktionellen Bereiche durch Faserorientierung und/oder Keramikgehalt des entsprechenden Werkstoffs eingestellt. Die Fasern werden beispielsweise so orientiert, daß optimiert mechanische Kräfte aufgenommen werden können (im Schaft und im Schaftfortsetzungsbereich) oder daß eine erhöhte Abrasionsbeständigkeit (im Deckhautbereich) aufgrund fehlender Faserstümpfe an der Flügeloberfläche vorliegt. Der Keramikgehalt wird beispielsweise so eingestellt, daß sich eine hohe Abrasionsbeständigkeit (im Deckhautbereich) oder eine erhöhte Biegefestigkeit (im Schaft oder im Schaftfortsetzungsbereich) ergibt.

Es wird der dann so hergestellte Strahlrudervorkörper pyrolisiert und keramisiert, beispielsweise durch Silicierung.

Der keramisierte Strahlrudervorkörper kann dann mit einer Hartstoffschicht mindestens teilweise beschichtet werden, um die Abrasionsbeständigkeit weiter zu erhöhen.

Insbesondere erfolgt die Pressung über einen in eine Hohlform eintauchenden Stempel. Dadurch läßt sich ein endkonturnaher Strahlrudervorkörper herstellen.

Es ist vorgesehen, daß die Hohlform und/oder der Stempel entsprechend der zu erzielenden Endkontur des Strahlruders ausgebildet sind. Dadurch lassen sich nachfolgende Bearbeitungsschritte wie Schleif- oder Fräsbearbeitungen minimieren.

Insbesondere erfolgt die Pressung unter Erwärmung, das heißt der Preßvorgang ist ein Warmpreßvorgang. Dadurch erfolgt eine Polymervernetzung, um einen CFK-Vorkörper zu erhalten. Beispielsweise läßt sich dann der Verbund zwischen einem Kernbereich und einem Deckhautbereich verbessern, wenn der Kernbereich mittels Einlegekernen hergestellt wird.

Insbesondere wird ein Stempel und/oder eine Hohlform beheizt.

Es kann auch vorgesehen sein, daß nach der Pressung ein Erhitzungsvorgang des Werkstücks durchgeführt wird. Bei einem solchen Temperungsvorgang wird der durch Warmpressung erzielte Verbund verbessert. Es ist aber grundsätzlich auch möglich, daß das Warmpressen mit einer solch hohen Temperatur erfolgt, daß eine nachträgliche Temperung nicht mehr notwendig ist.

Insbesondere wird bei der Pressung ein Deckhautbereich und ein Kernbereich miteinander verpreßt, wobei der Deckhautbereich den Kernbereich umgibt. Es wird dadurch eine Sandwichstruktur hergestellt, aus welcher sich dann durch Keramisierung das Strahlruder ergibt. In dem Deckhautbereich lassen sich Fasern parallel zu einer Flügeloberfläche ausrichten bzw. Kurzfasern mit homogener Verteilung einsetzen. Der Kernbereich kann bezüglich der mechanischen Stabilität optimiert werden. Insbesondere lassen sich für den Kernbereich andere Materialien einsetzen als für den Deckhautbereich, wobei diese Materialien entsprechend funktionell ausgewählt werden. Der Kernbereich kann auch aus pyrolisierten Vorkörpern hergestellt sein, die mechanisch bearbeitet wurden, um eine bestimmte Formgestalt zu erzielen. Die entsprechenden Vorkörper bilden Einlegekerne, die dann über die Deckhäute beim Pressen verbunden werden.

Vorteilhafterweise wird der Deckhautbereich mittels eines faserverstärkten Werkstoffes hergestellt, wobei die Fasern parallel zu einer Flügeloberfläche des Strahlruders orientiert sind. Dadurch wird vermieden, daß Faserstümpfe an der Flügeloberfläche entstehen. Dies erhöht die Abrasionsbeständigkeit des Strahlruders.

Beispielsweise wird der Deckhautbereich mittels Gewebelagen hergestellt. Diese werden in der Hohlform ausgelegt.

Es ist auch möglich, daß der Deckhautbereich über einen mit Kurzfasern verstärkten faserverstärkten Werkstoff hergestellt wird. Über Kurzfasern (die insbesondere eine Länge kleiner als 3 mm aufweisen) läßt sich eine homogene Faserverteilung mit definierter Ausrichtung in dem Deckhautbereich erreichen. Dadurch läßt sich bei einem keramischen Werkstoff eine hohe Korrosionsbeständigkeit erzielen.

Es ist auch günstig, wenn der Schaft aus unidirektionalen Fasern oder Gewebelagen hergestellt wird. Dadurch ergibt sich eine hohe Biegefestigkeit, um entsprechende mechanische Belastungen aufnehmen zu können.

Insbesondere wird ein Schaftfortsetrungsbereich in einem Kernbereich hergestellt. Dadurch läßt sich eine sichere Verbindung zwischen dem Schaft und einem Flügel des Strahlruders erzielen, wobei Kräfte optimiert ableitbar sind.

Der Schaftfortsetzungsbereich ist vorzugsweise aus unidirektionalen Fasern oder Gewebelagen hergestellt. Es kann dabei vorgesehen sein, daß der Schaft und der Schaftfortsetzungsbereich integral hergestellt werden.

Insbesondere ist es günstig, wenn Fasern im Schaft und/oder Schaftfortsetzungsbereich im wesentlichen parallel zu einer Schaftlängsachse ausgerichtet werden.

Es kann auch vorgesehen sein, daß in dem Kernbereich ein Zwischenbereich hergestellt wird. Es lassen sich andere Materialien einsetzen, als beispielsweise in einem Schaftfortsetzungsbereich und in einem Deckhautbereich. Durch entsprechende Materialwahl läßt sich dann das Strahlruder mit optimierten Eigenschaften herstellen.

Beispielsweise wird der Zwischenbereich aus einem mit Kurzfasern (oder auch mit Langfasern) verstärkten faserverstärkten Werkstoff hergestellt. Es werden Kurzfasern mit einer solchen Länge gewählt, daß sich eine optimierte Festigkeit des Kernbereichs ergibt.

Es ist auch möglich, daß der Zwischenbereich aus einem monolithischen Keramikwerkstoff hergestellt wird. Dieser Keramikwerkstoff ist durch den Deckhautbereich umgeben und damit gegenüber dem Außenraum geschützt.

Er weist eine hohe Abrasionsbeständigkeit auf. Eine mangelnde Thermoschockbeständigkeit spielt deshalb keine Rolle.

Es kann auch ein Strahlruder zum Einsatz in Heißgasströmungen mit einem Flügel bereitgestellt werden, welcher aus einem faserverstärkten keramischen Werkstoff hergestellt ist, wobei der faserverstärkte keramische Werkstoff mittels durchgehenden Gewebelagen hergestellt ist und der Werkstoff für einen Kernbereich des Flügels einen höheren Keramikgehalt aufweist als ein Deckbereich zu beiden Seiten des Kernbereichs.

Es läßt sich dadurch ein abrasiv beständiger Bereich bzw. eine abrasiv beständige Schicht im Kernbereich des Flügels ausbilden, wobei aufgrund der durchgehenden Gewebelagen eine Erstreckung bis zu Flügelkanten möglich ist. Auch dort ergibt sich dann eine hohe Abrasionsbeständigkeit. Weiterhin lassen sich hohe mechanische Festigkeiten erzielen, da die Deckbereiche entsprechend ausbildbar sind und insbesondere so ausgebildet werden können, daß hohe mechanische Festigkeiten in Zugzonen und Druckzonen vorliegen.

Insbesondere erstreckt sich der Kernbereich bis in Flügelkanten bzw. eine oder mehrere Flügelkanten sind am Kernbereich gebildet. Dadurch ergibt sich eine hohe Abrasionsfestigkeit an Flügelkanten.

Insbesondere sind gegenüberliegende Flügelkanten am Kernbereich gebildet.

Günstig ist es, wenn die Gewebelagen parallel zu mindestens einem Flügeloberflächenbereich ausgerichtet sind. In diesem Bereich treffen keine Faserstümpfe auf die Oberfläche, so daß auch dadurch eine hohe Abrasionsfestigkeit erreicht wird.

Es ist dann günstig, wenn die Gewebelagen parallel zu dem Flügeloberflächenbereich mit der größten Fläche ausgerichtet sind.

Ein solcher Flügel läßt sich beispielsweise aus C/C-SiC-Werkstoffen oder SiC/SiC-Werkstoffen herstellen. Insbesondere ist es vorgesehen, daß ein (keramischer) SiC-Gehalt im Kernbereich höher ist als in den Deckbereichen. Es ergibt sich dadurch eine hohe Abrasionsfestigkeit. Die Deckbereiche lassen sich bezüglich Druck- und Zugfestigkeit optimieren, das heißt bezüglich der mechanischen Festigkeit optimieren.

Es ist günstig, wenn der Kernbereich aus einem C/C-SiC-XD-Werkstoff hergestellt ist, welcher eine hohe Abrasionsfestigkeit aufweist.

Es ist dann günstig, wenn die Deckbereiche aus einem C/C-SiC-XB-Werkstoff und/oder C/C-SiC-XT-Werkstoff hergestellt sind. Es ergibt sich dann hier eine hohe mechanische Festigkeit.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels eines Flugobjekts mit Strahlrudern;
- Figur 2: eine perspektivische Darstellung eines Ausführungsbeispiels eines Strahlruders;
- Figur 3: eine schematische Querschnittansicht (längs der Linie A-A gemäß Figur 2) eines ersten Ausführungsbeispiels eines erfindungsgemäßen Strahlruders;
- Figur 4: eine schematische Querschnittansicht eines zweiten Ausführungsbeispiels eines erfindungsgemäßen Strahlruders;
- Figur 5: eine schematische Querschnittansicht eines dritten Ausführungsbeispiels eines erfindungsgemäßen Strahlruders;
- Figur 6: eine schematische Querschnittansicht eines vierten Ausführungsbeispiels eines erfindungsgemäßen Strahlruders;
- Figur 7: eine schematische Querschnittansicht eines fünften Ausführungsbeispiels eines erfindungsgemäßen Strahlruders;
- Figur 8: eine schematische perspektivische Ansicht einer Vorrichtung zur Herstellung eines erfindungsgemäßen Strahlruders und
- Figur 9: eine schematische Querschnittansicht eines weiteren Ausführungsbeispiels eines Strahlruders.

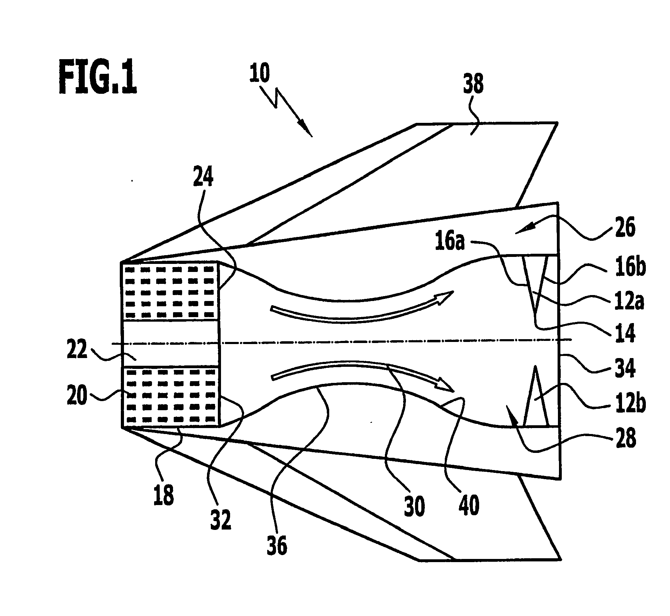

In Figur 1 sind anhand eines Ausführungsbeispiels eines Triebwerks 10 (für ein Fluggerät) Strahlruder 12a, 12b gezeigt. Solche Strahlruder 12a, 12b lassen sich beispielsweise aus einer Faserkeramik herstellen, welche an einer Kante 14 und an Flanken 16a, 16b mit einer Hartstoffschicht beschichtet ist.

Bei dem Triebwerk 10 ist in einem Gehäuse 18 ein Treibsatz 20 mit einem Feststoffbrennstoff angeordnet. Der Treibsatz 20 kann mit einem zentralen Kanal 22 versehen sein.

An ein üblicherweise rückwärtiges Ende 24 des Gehäuses 18 schließt sich ein Heckkonus 26 an, in welchem eine Düse 28 angeordnet ist. Im Betrieb ist diese Düse 28 von einer Heißgasströmung 30 durchsetzt, die sich beim Abbrennen des Treibsatzes 20 ausbildet. Die Heißgasströmung 30 tritt im Bereich des Endes 24 aus dem Gehäuse 18 aus. Die Heißgasströmung 30 tritt in ein treibsatzseitiges Ende 32 der Düse 28 ein und aus einem Austrittsende 34 in die Umgebung aus, wobei die Düse 28 zwischen dem treibsatzseitigen Ende 32 und dem Austrittsende 34 eine Verengung 36 aufweist.

Die Strahlruder 12a, 12b sind nahe des Austrittsendes 34 der Düse 28 vorgesehen. Sie dienen dazu, die Heißgasströmung 30 unmittelbar vor dem Austritt durch das Austrittsende 34 zu beeinflussen, um damit ein Flugobjekt, welches mit dem Triebwerk 10 versehen ist, zu lenken.

Beispielsweise umfaßt der Heckkonus 26 noch zusätzliche äußere, flugstabilisierende Luftleitflächen 38. Diese werden auch als Fins bezeichnet.

Da die Heißgasströmung 30 bei dem aus Feststoff bestehenden Treibsatz 20 nicht nur heiße Gase sondern aufgrund des Abbrennens des Feststoffs auch korrosive und/oder abrasive Partikel aufweist, müssen die Strahlruder 12a, 12b korrosionsbeständig und beständig gegenüber abrasiven Partikeln sein. Beispielsweise sind die Strahlruder 12a, 12b mit einer Beschichtung eines Hartstoffmaterials wie beispielsweise Borcarbid versehen. Auch eine die Heißgasströmung führende Innenwand 40 der Düse 28 kann mit einer entsprechenden Hartstoffbeschichtung versehen sein.

Ein Strahlruder als Strukturelement, welches korrosiven und/oder abrasiven Heißgasströmungen standhält, wobei das Strukturelement einen faserkeramischen Grundkörper umfaßt, der Grundkörper aus einem C/C-Formkörper gebildet ist, welcher in einem an eine Oberseite des Grundkörpers angrenzenden Volumenbereich eine mit Si zu C/C-SiC umgesetzte faserkeramische Struktur aufweist und mindestens auf einem Teilbereich der Oberseite des Grundkörpers eine durch Plasmaspritzen erzeugte keramische Hartstoffschicht aufgetragen ist, ist in der nicht vorveröffentlichten deutschen Anmeldung Nr. 10 2004 008 452.1 vom 13. Februar 2004 des gleichen Anmelders offenbart.

Ein Hartstoffbeschichtungsverfahren, bei dem eine Hartstoffschicht mittels eines Induktionsplasmas durch Plasmaspritzen auf einen Träger aufgebracht wird, ist in der nicht vorveröffentlichten deutschen Patentanmeldung Nr. 10 2004 022 358.0 vom 30. April 2004 des gleichen Anmelders offenbart.

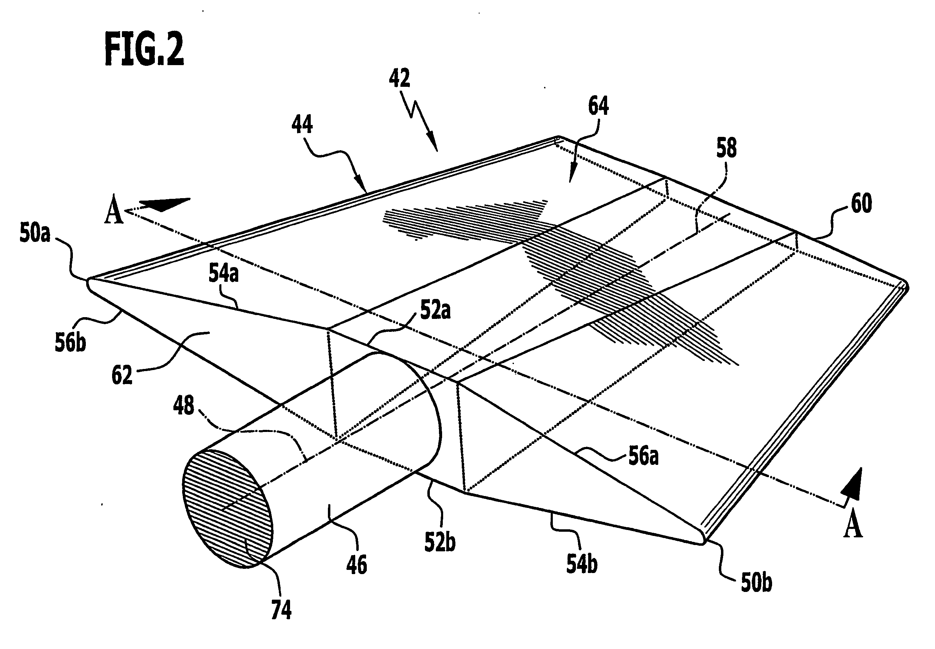

Ein Ausführungsbeispiels eines Strahlruders, welches in Figur 2 Perspektivisch gezeigt und dort als Ganzes mit 42 bezeichnet ist, umfaßt einen Flügel 44 und einen mit dem Flügel 44 verbundenen Schaft 46. Der Flügel 44 ist der Heißgasströmung 30 ausgesetzt. Über den Schaft 46 ist das Strahlruder 42 in der Düse 28 drehbar gelagert. Der Schaft 46 dient somit als Befestigungsbolzen zur Fixierung des Flügels 44 an der Düse 28.

Der Schaft 46 ist beispielsweise mittels eines zylindrischen Elements gebildet, welches sich in einer Schaftlängsachse 48 erstreckt.

Der Flügel 44 ist bei der beispielhaft gezeigten Geometrie profiliert mit einem Flügelquerschnitt, welcher näherungsweise einem Achteck oder Sechseck entspricht mit parallel gegenüberliegenden schmalen Seiten 50a, 50b und parallel gegenüberliegenden Seiten 52a, 52b. Die Seiten 50a und 52a sind durch eine Seite 54a verbunden, welche jeweils zu diesen in einem Winkel steht. Die Seiten 50b und 52b sind durch eine entsprechende Seite 54b verbunden, welche im wesentlichen parallel zu der Seite 54a ausgerichtet ist.

Auf ähnliche Weise sind die Seiten 52a und 50b durch eine Seite 56a verbunden und die Seiten 50a und 52b durch eine Seite 56b, welche im wesentlichen parallel zu der Seite 56a ist.

Im Querschnitt ergibt sich ein Flügelprofil, welches näherungsweise die Zusammensetzung eines Rechtecks (gebildet über die Seiten 52a und 52 b) und zweier gleichseitiger Dreiecke (mit den Seiten 54a und 56b bzw. 56a und 54b) ist, wobei diese Dreiecke an den Spitzen (über die Seiten 50a, 50b) abgeschnitten sind. Die Basen dieser beiden Dreiecke sind Querseiten zu den Seiten 52a, 52b.

Eine Flügelachse 58 ist im wesentlichen koaxial zur Schaftlängsachse 48.

Der Flügel 44 ist spiegelsymmetrisch zur Flügelachse 58 ausgebildet. Der Abstand der Seiten 52a, 52b wird zu einem vorderen Ende 60 (welches einem schaftseitigen Ende 62 gegenüber liegt) kleiner, das heißt der Flügel 44 verjüngt sich in einer Abstandsrichtung zwischen den beiden Seiten 52a, 52b zu dem vorderen Ende 60 hin.

Ferner verringert sich der Abstand zwischen den Seiten 50a, 50b zu dem vorderen Ende 60 hin, das heißt in dieser Abstandsrichtung (welche quer zu der Abstandsrichtung zwischen den Seiten 52a und 52b liegt) verjüngt sich der Flügel 44 ebenfalls zu dem vorderen Ende 60 hin.

Eine Flügeloberfläche 64, welche der Heißgasströmung 30 ausgesetzt ist, setzt sich zusammen aus den den Seiten 52a, 52b, den Seiten 56a, 54b, den Seiten 54a, 56b und den Seiten 50a und 50b zugeordneten Flächen sowie der Stirnfläche am Ende 60.

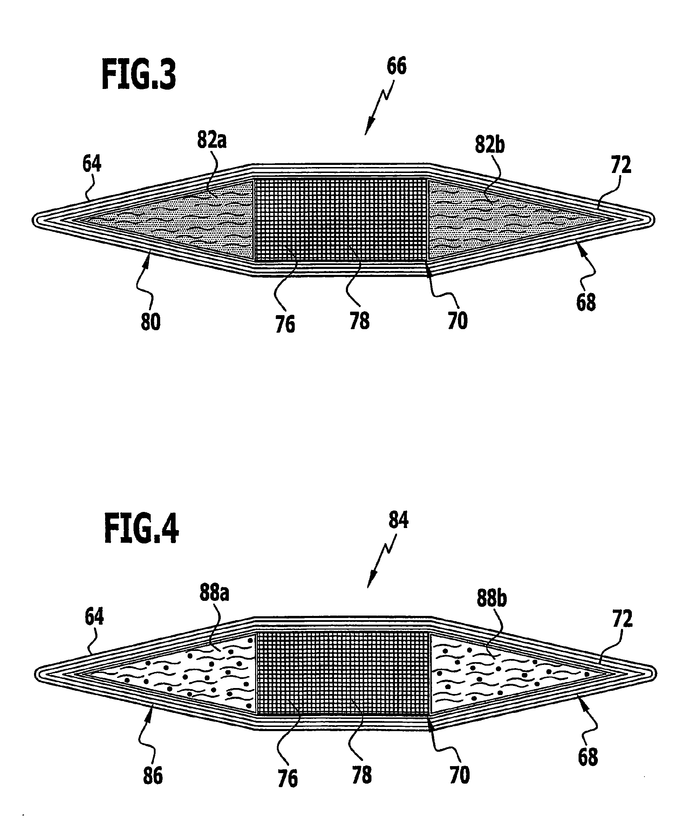

Bei einem ersten Ausführungsbeispiel eines erfindungsgemäßen Strahlruders, welches in Figur 3 in einer schematischen Querschnittansicht gezeigt und dort als Ganzes mit 66 bezeichnet ist, ist der Flügel 44 aus einem Deckhautbereich 68 und einem Kernbereich 70 zusammengesetzt. Der Deckhautbereich 68 besteht aus einem faserverstärkten Werkstoff und insbesondere faserverstärkten keramischen Werkstoff. Die Fasern 72 in dem Deckhautbereich 68 sind parallel zur Flügeloberfläche 64 ausgerichtet. Dadurch liegen an der Flügeloberfläche 64 keine Faserstümpfe. Dadurch wird die Abrasionsbeständigkeit des Strahlruders erhöht.

Eine typische Dicke des Deckhautbereichs 68 liegt im Millimeterbereich.

Bei den Fasern 72 des faserverstärkten Werkstoffes handelt es sich insbesondere um Endlosfasern oder Langfasern. Als Endlosfasern werden üblicherweise Fasern bezeichnet, die in der Form von Rovings oder Geweben verarbeitet werden und deren Länge konstruktionsbedingt ist oder durch die geometrische Abmessung des Bauteils bedingt ist. Langfasern haben in der Regel Faserlängen zwischen 3 mm und 50 mm. Unter Kurzfasern werden üblicherweise Fasern mit einer Länge bis 3 mm verstanden. Wenn Langfasern verwendet werden, dann mit einer solchen Länge, daß wie oben erwähnt keine Faserstümpfe an der Flügeloberfläche 64 liegen.

Der Deckhautbereich 68 ist insbesondere aus einem faserverstärkten Keramikmaterial wie C/C-SiC oder SiC/SiC hergestellt, wobei das entsprechende Keramikmaterial C-Fasern bzw. SiC-Fasern enthält.

Es kann vorgesehen sein, daß der Deckhautbereich 68 aus einem C/C-SiC-XB-oder C/C-SiC-XD-Material hergestellt ist.

Durch die Verwendung thermisch vorbehandelter C-Fasern lassen sich unterschiedliche Mikrostrukturen mit unterschiedlichen Keramikgehalten erreichen. Es wird zwischen den drei Materialqualitäten C/C-SiC XB, XT und XD unterschieden. Die Mikrostruktur wird bestimmt durch die Stärke der Faser-Matrix-Bindung im CFK-Zustand (Zustand vor der Pyrolisierung und vor der Keramisierung). Eine hohe Faser-Matrix-Bindung führt nach der Silicierung zu einer XB-Struktur; die durch dichte C/C-Segmente in einer SiC-Matrix charakterisiert ist. Eine niedrige Faser-Matrix-Bindung führt dagegen zu einem Ablösen der Matrix von den Fasern. Dadurch wird das komplette Faserbündel bei der Keramisierung für das Silicium zugänglich, was zu einem relativ spröden faserverstärkten Werkstoff mit hohem Keramikgehalt und hoher Steifigkeit führt. Diese XD-Struktur weist von den Strukturen XB, XT und XD den höchsten E-Modul auf und weist aufgrund des hohen Keramikgehalts eine besonders hohe Abrasionsbeständigkeit auf. Der XT-Werkstoff liegt im Bezug auf die Mikrostruktur zwischen dem XB-Werkstoff und dem XD-Werkstoff. Im Vergleich zu dem XB-Werkstoff weist der XT-Werkstoff eine erhöhte Schadenstoleranz sowie höhere Versagensspannungen auf.

C/C-SiC-Compositmaterialien, welche unter der Bezeichnung XB, XD und XT bekannt sind, sind in dem Artikel "Principles And New Aspects in LSI-Processing" von J. Fabig, W. Krenkel, Tagungsband 9th CIMTEC, Florenz, 14. bis 19. Juni 1998 beschrieben. Auf diesen Artikel wird Bezug genommen. Durch die Ausrichtung der Fasern 72 parallel zur Flügeloberfläche 64 und Verwendung des Werkstoffes XB oder XT ergibt sich eine hohe Abrasionsfestigkeit.

Der Schaft 46 ist ebenfalls aus einem faserverstärkten Werkstoff und insbesondere faserverstärkten keramischen Werkstoff wie C/C-SiC hergestellt. Er ist dabei, wie in Figur 2 angedeutet, über Gewebelagen 74 oder unidirektionale Langfasern hergestellt, weiche im wesentlichen parallel zur Schaftlängsachse 48 ausgerichtet sind.

Ein bevorzugtes Material für den Schaft 46 ist XT oder XB, welches hochfest und biegefest ist. (Der Werkstoff XT weist eine höhere Festigkeit als XB auf, jedoch eine geringere Abrasionsbeständigkeit.)

Der Kernbereich 70 umfaßt einen Schaftfortsetzungsbereich 76 in dem Flügel 44. Der Schaftfortsetzungsbereich 76 ist im wesentlichen gleich hergestellt wie der Schaft 46, das heißt vorzugsweise über Gewebelagen 78 (Figur 3) oder unidirektionale (Lang- oder Endlos-)Fasern. Insbesondere wird als Material XT eingesetzt.

Bei dem in Figur 3 gezeigten Ausführungsbeispiel ist der Schaftfortsetzungsbereich 76 im Querschnitt rechteckförmig ausgebildet, wobei sich dieser Rechteckbereich zu dem Ende 60 hin verjüngt.

Die Gewebelagen 78 bzw. unidirektionalen Fasern sind parallel zur Schaftlängsachse 48 ausgerichtet.

Die Langfasern erstrecken sich insbesondere durchgehend durch den Schaft 46 und den Kernbereich 70, das heißt weisen eine Länge auf, welche im wesentlichen dem Abstand zwischen dem Ende 46 und dem Ende des Kernbereichs 70, welches dem vorderen Ende 60 des Flügels 44 zugewandt ist, entspricht. Zur Ausbildung der Profilierung des Flügels 44 ist gegebenenfalls eine Schäftung der Fasern notwendig.

Beidseitig des Schaftfortsetzungsbereichs 76 ist ein Zwischenbereich 80 mit einem ersten Teil-Zwischenbereich 82a und einem zweiten Teil-Zwischenbereich 82b gebildet. Diese Teil-Zwischenbereiche 82a, 82b sind beispielsweise mittels eines kurzfaserverstärkten keramischen Werkstoffs hergestellt. Bei den Kurzfasern handelt sich insbesondere um C-Kurzfasern. Ein mögliches faserverstärktes keramisches Material ist XB oder XD.

Es ist auch möglich, daß für den Zwischenbereich 80 unterschiedliche Materialien eingesetzt werden. So kann beispielsweise der Zwischenbereich 80 in einem Bereich, welcher näher zu dem Schaft 46 liegt, aus einem faserverstärkten Werkstoff mit höherer Biegefestigkeit wie XB hergestellt sein und in einem Bereich, welcher zum Ende 60 hin liegt, aus einem faserverstärkten Werkstoff mit höherer Abrasionsfestigkeit wie beispielsweise XD hergestellt sein.

Bei einem zweiten Ausführungsbeispiel eines Strahlruders, welches in Figur 4 schematisch in einer Querschnittsdarstellung gezeigt und dort als Ganzes mit 84 bezeichnet ist, ist ein Zwischenbereich 86 mit Teil-Zwischenbereichen 88a und 88b vorgesehen. Der Zwischenbereich 86 ist aus einem auf Kurzfasern und insbesondere C-Kurzfasern basierten faserverstärkten Werkstoff hergestellt, welcher Additive wie SiC und/oder B₄C enthält. Ansonsten ist das Strahlruder 84 gleich aufgebaut wie das Strahlruder 66..Für gleiche Elemente werden deshalb gleiche Bezugszeichen verwendet. Die Teil-Zwischenbereiche 88a und 88b können auch aus unterschiedlichen Werkstoffen hergestellt sein.

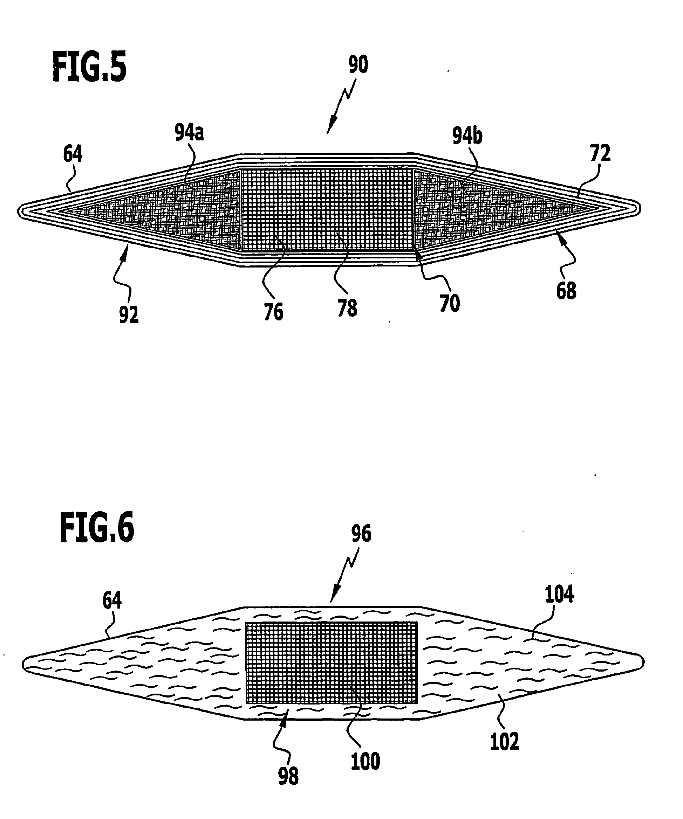

Bei einem dritten Ausführungsbeispiel, welches in Figur 5 schematisch in einer Querschnittsdarstellung gezeigt und dort als Ganzes mit 90 bezeichnet ist, ist ein Zwischenbereich 92 vorgesehen, welcher einen ersten Teil-Zwischenbereich 94a und einen zweiten Teil-Zwischenbereich 94b umfaßt. Die beiden Teil-Zwischenbereiche 94a, 94b sind jeweils an einer Seite des Kernbereichs 70 angeordnet. (Für gleiche Elemente wie bei dem Ausführungsbeispiel 66 gemäß Figur 3 werden gleiche Bezugszeichen verwendet.) Die Teil-Zwischenbereiche 94a, 94b sind aus einem monolithischen Keramikmaterial wie beispielsweise einer biomorphen Keramik hergestellt. Beispielsweise wird der Zwischenbereich 92 über einen pyrolisierten Vorkörper oder Grünkörper wie beispielsweise einen entsprechenden Holzkörper hergestellt. Dieser wird bei der Silicierung zu einer monolithischen Keramik umgewandelt. Ansonsten ist das Strahlruder gemäß dem dritten Ausführungsbeispiel 90 gleich aufgebaut wie das Strahlruder 66.

Wiederum sind im Kernbereich 70 unidirektionale Langfasern längs der Flügelachse 58 orientiert bzw. Gewebelagen sind bei der Herstellung längs der Flügelachse 58 orientiert.

Bei einem vierten Ausführungsbeispiel, welches in Figur 6 schematisch gezeigt und dort als Ganzes mit 96 bezeichnet ist, ist als Innenbereich 98 ein Kernbereich 100 vorgesehen, welcher aus unidirektionalen Fasern oder Gewebelagen hergestellt ist. Dieser Kernbereich 100 ist ohne Zwischenbereich von einem Deckhautbereich 102 umgeben. Dieser Deckhautbereich 102 ist aus einem mit Kurzfasern verstärkten faserverstärkten Werkstoff wie beispielsweise XD hergestellt. Die C-Kurzfasern (in Figur 6 durch das Bezugszeichen 104 angedeutet) sind vorzugsweise so ausgerichtet, daß sie mindestens nicht spitz auf die Flügeloberfläche 66 auftreten. Sie können prinzipiell auch mindestens näherungsweise parallel zur Flügeloberfläche 66 ausgerichtet sein.

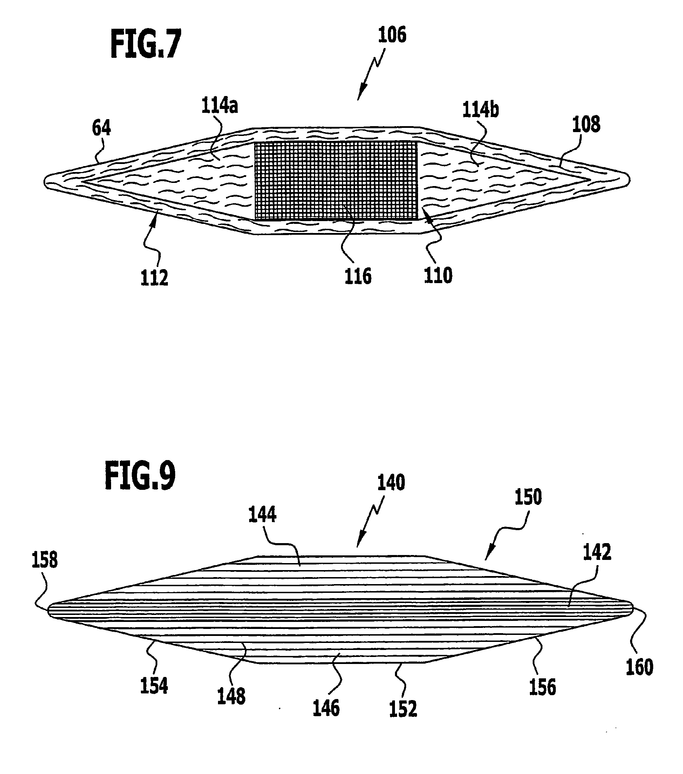

Bei einem fünften Ausführungsbeispiel, welches in Figur 7 schematisch in einer Querschnittsdarstellung gezeigt und dort als Ganzes mit 106 bezeichnet ist, umgibt ein Deckhautbereich 108 einen Kernbereich 110. Der Kernbereich 110 umfaßt einen Zwischenbereich 112 mit Teil-Zwischenbereichen 114a und 114b, welche jeweils auf einer Seite eines Schaftfortsetzungsbereiches 116 angeordnet sind. Die Teil-Zwischenbereiche 114a, 114b grenzen jeweils auf einer Seite an den Schaftfortsetzungsbereich 116 und der Deckhautbereich 108 umgibt die Teil-Zwischenbereiche 114a, 114b und den Schaftfortsetzungsbereich 116.

Der Deckhautbereich 108 ist aus einem mit Kurzfasern und insbesondere C-Kurzfasern hergestellten faserverstärkten Werkstoff mit beispielsweise XD-Mikrostruktur hergestellt. Die Länge der Kurzfasern liegt insbesondere unterhalb 3 mm und diese sind so ausgerichtet, daß sie mindestens nicht in einem spitzen Winkel auf die Flügeloberfläche 66 treffen.

Der Schaftfortsetzungsbereich 116 ist mittels unidirektionalen Fasern (welche parallel zur Flügelachse 58 ausgerichtet sind) oder Gewebelagen hergestellt.

Der Zwischenbereich 112 ist aus einem mit C-Kurzfasern verstärkten kurzfaserverstärkten Werkstoff wie XB oder XD hergestellt.

Bei den Strahlrudern 66, 84, 90, 96, 106 wird die Flügeloberfläche 64 mittels der entsprechenden Deckhautbereiche 68, 102 bzw. 108 ausgebildet. Auf diesen Deckhautbereichen 68, 102, 108 kann eine Hartstoffbeschichtung vorgesehen sein, für die beispielsweise Borcarbid als HartstofFmaterial eingesetzt wird. Es wird in diesem Zusammenhang auf die nicht vorveröffentlichten deutschen Patentanmeldungen Nr. 10 2004 008 452.1 vom 13. Februar 2004 und 10 2004 022 358.0 vom 30. April 2004 des gleichen Anmelders Bezug genommen.

Beim erfindungsgemäßen Verfahren zur Herstellung eines Strahlruders 42 wird ein endkonturnaher Strahlrudervorkörper mittels Pressen hergestellt.

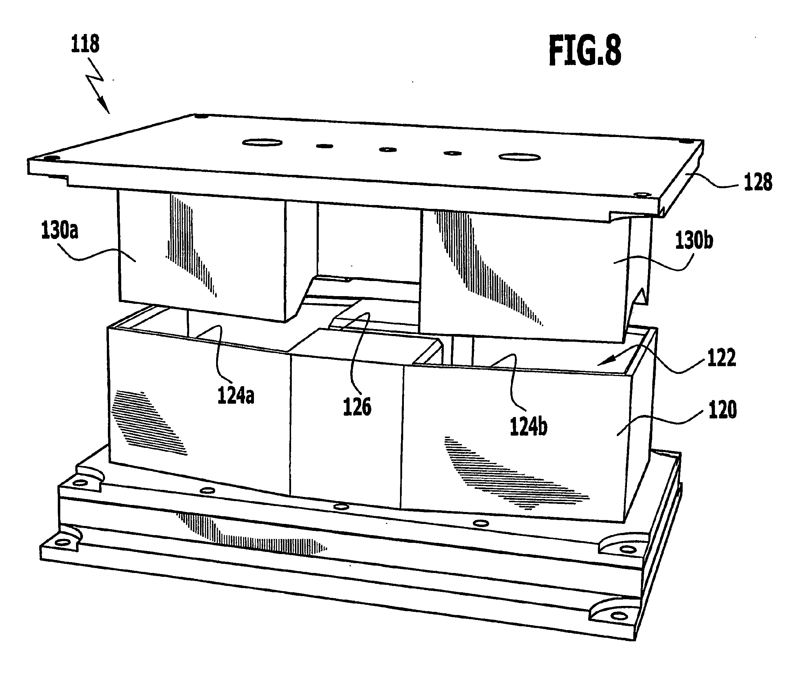

Ein Ausführungsbeispiel einer entsprechenden Pressenvorrichtung 118 ist in Figur 8 schematisch gezeigt. Die Pressenvorrichtung 118 weist eine Hohlform 120 auf, welche beheizbar ist. Die Hohlform 120 weist einen Aufnahmeraum 122 für ein oder mehrere Werkstücke auf. Bei dem in Figur 8 gezeigten Ausführungsbeispiel weist der Aufnahmeraum 122 einen ersten Teilraum 124a und einen zweiten Teilraum 124b auf. Die Teilräume 124a, 124b dienen jeweils zur Herstellung eines (endkonturnah gepreßten) Strahrudervorkörpers, das heißt bei einem Preßvorgang lassen sich zwei Strahlrudervorkörper herstellen.

Die Teilräume 124a, 124b sind so ausgebildet, daß die Kontur des Strahlruders 42 wie oben beschrieben herstellbar ist.

Zwischen den Teilräumen 124a, 124b liegt ein Raum 126, welcher zur Aufnahme des jeweiligen Schafts 46 der herzustellenden Strahlrudervorkörper dient.

Die Pressenvorrichtung 118 umfaßt ferner eine Stempeleinrichtung 128 mit einem ersten Stempelteil 130a und einem zweiten Stempelteil 130b. Der erste Stempelteil 130a taucht in den Teilraum 124a und der zweite Stempelteil 130b in den Teilraum 124b. Die beiden Stempelteile 130a und 130b sind beheizbar. Sie sind in ihren Konturen angepaßt an die Teilräume 124a, 124b und an die Oberflächenform des endkonturnah herzustellenden Strahlrudervorkörpers.

In der Hohlform 120 werden die zu verpressenden Werkstücke in einer Art von Sandwichstruktur positioniert. Beispielsweise werden die entsprechenden Gewebelagen für den Deckhautbereich 68 mit dazwischenliegenden Gewebelagen 74 für den Schaftfortsetzungsbereich 76 und den Schaft 46 und das Material für den Zwischenbereich 80 positioniert. Die Gewebelagen für den Deckhautbereich 68 sind dabei so ausgerichtet, daß die Fasern parallel zur Flügeloberfläche 64 sind.

Bei beheizten Stempeln 130a, 130b und beheizter Hohlform 120 wird dann ein Preßvorgang durchgeführt, bei dem der Deckhautbereich mit dem Kernbereich verpreßt wird. Eine typische Größenordnung für den aufgebrachten Druck beim Pressen liegt bei 46 bar.

Beispielsweise liegt die Temperatur der Hohlform 120 und der Stempeleinrichtung 128 beim Pressen bei ca. 180 °C. Auch höhere Temperaturen sind möglich.

Bei einer Verfahrensführung der Verpressung bei 180°C wurde nach dem Verpressen das so hergestellte Bauteil (der endkonturnah hergestellte Strahlrudervorkörper) getempert.

Durch die Warmpreßherstellung des Strahlrudervorkörpers in der Preßvorrichtung 118 läßt sich dieser endkonturnah herstellen, so daß eine nachträgliche Fräsbearbeitung mit der Erzeugung von Faserstümpfen an der Flügeloberfläche 64 höchstens in beschränktem Umfang notwendig ist. Der entsprechende endkonturnah hergestellte Strahlrudervorkörper wird dann keramisiert, indem zuerst eine Pyrolyse durchgeführt wird und eine anschließende Silicierung. Zur Silicierung kann beispielsweise das LSI-Verfahren eingesetzt werden. Auf das so hergestellte Bauteil kann noch eine Hartstoffbeschichtung aufgebracht werden, beispielsweise durch Aufspritzen mittels eines Induktionsplasmas, wie in der deutschen Anmeldung 10 2004 022 358.0 vom 30. April 2004 beschrieben. Eine Beschichtung über CVD oder EB-PVD ist auch möglich.

Durch das erfindungsgemäße Verfahren lassen sich die Herstellungskosten senken und es läßt sich die Herstellungszeit senken; durch die endkonturnahe Herstellung des Strahlrudervorkörpers (welcher insbesondere ein CFK-Vorkörper ist) lassen sich die mechanischen Bearbeitungsvorgänge zur Herstellung der Endkontur des Strahlruders verringern.

Erfindungsgemäß ist es möglich, verschiedene Werkstoffe mit ihren entsprechenden Eigenschaften angepaßt an die Anforderungen von bestimmten Bereichen des Strahlruders zu verwenden. Beispielsweise lassen sich C-Kurzfasern, C-Langfasern bzw. C-Gewebelagen kombinieren. Je nach mechanischer und abrasiver Belastung des jeweiligen Bereiches des herzustellenden Strahlruders wird der optimierte Werkstoff eingesetzt.

Es ergibt sich dann ein auf die mechanischen Belastungen und die abrasiven Belastungen optimiertes Strahlruder. Insbesondere erfolgt die Optimierung durch Faserorientierung und entsprechende Werkstoffwahl insbesondere bezüglich des Keramikgehalts.

Die Abrasionsbeständigkeit wird dadurch verbessert, daß die Fasern in dem Deckhautbereichen parallel zur Flügeloberfläche 64 orientiert sind und damit nicht angeschnitten sind. Insbesondere wird im Deckhautbereich ein faserverstärkter Werkstoff mit hohem Keramikanteil eingesetzt wie beispielsweise XD, was zur weiteren Verbesserung der Abrasionsbeständigkeit beiträgt.

Beispielsweise läßt sich auch ein Kern aus einer monolithischen Keramik ohne Faserverstärkung einsetzen. Monolithische Keramik-Bauteile sind bezüglich Heißgaskorrosion nicht schadenstolerant und auch nicht thermoschockbeständig. Sie haben ein ausgesprochenes Sprödbruchverhalten. Bei der erfindungsgemäßen Lösung ist ein solcher monolithischer Keramikkern von dem faserverstärkten Deckhautbereich umgeben und damit geschützt. Ein solcher monolithischer Keramikbereich läßt sich während der Herstellung integral mitherstellen, so daß insbesondere keine zusätzliche Bearbeitung bzw. Einpassung notwendig ist.

Durch unterschiedliche thermische Ausdehnungskoeffizienten von monolithischen Keramikmaterialien und C/C-SiC-Materialien der Deckhautbereiche entstehen während des Abkühlens bei der Silicierung Risse in der monolithischen Keramik. Diese zerbricht in kleine Teile. Dadurch erhöht sich die Thermoschockbeständigkeit. Die Keramikteile wiederum können bei Thermoschock (während des Einsatzes des Strahlruders) zusätzlich zerbrechen. Die Teile werden jedoch durch den Deckhautbereich gehalten bzw. am Wegfliegen gehindert.

Es lassen sich Kurzfasern und insbesondere C-Kurzfasern einsetzen. Es ergibt sich dadurch eine homogene Faserverteilung im Deckhautbereich des Strahlruders. Es lassen sich dadurch SiC-Schichten an der Bautelloberfläche ausbilden, die einen sehr hohen Abrasionswiderstand aufweisen.

Insbesondere ist es dann auch möglich, unterschiedliche Faserlängen bei Kurzfasern einzusetzen. Kurze Fasern ergeben einen hohen Abrasionswiderstand und werden bevorzugterweise in oberflächennahen Bereichen eingesetzt. Längere Fasern führen zu höheren Festigkeiten und werden bevorzugterweise im Kernbereich des Strahlruders eingesetzt.

Bei der Verwendung von Gewebelagen können diese in einer 0°/90°-Faserorientierung verwendet werden oder in einer 0°/90° und ± 45°-Faserorientierung verwendet werden.

Ein weiteres Ausführungsbeispiel eines Strahlruders ist in einer schematischen Querschnittansicht in Figur 9 gezeigt und dort als Ganzes mit 140 bezeichnet. Dieses Strahlruder 140 weist einen Kernbereich 142 auf, zu welchem beidseitig jeweilige Deckbereiche 144, 146 liegen. Der Kernbereich und die Deckbereiche 144, 146 sind aus Werkstoffen mit unterschiedlichen Eigenschaften hergestellt.

Das Strahlruder 140 ist aus einem faserverstärkten keramischen Material hergestellt. Zur Herstellung werden durchgehende Gewebelagen 148 verwendet.

Das Strahlruder 140 umfaßt einen Flügel 150, an welchem ein Schaft sitzt (in Figur 9 nicht gezeigt). Der Flügel weist eine Flügeloberfläche mit unterschiedlichen Bereichen auf. Die Gewebelagen 148 sind vorzugsweise parallel zu einem Oberflächenbereich 152 ausgerichtet, welcher die im Vergleich mit benachbarten Oberflächenbereichen 154, 156 größte Fläche aufweist.

An dem Kernbereich 142 sind gegenüberliegende Kanten 158, 160 des Flügels 150 gebildet, das heißt der Kernbereich 142 erstreckt sich bis in diese Kanten 158, 160.

Die Gewebelagen 148 mit den Fasern sind so vorbehandelt, daß sich im Kernbereich 142 ein höherer Keramikgehalt ergibt als in den Deckbereichen 144 und 146. Insbesondere ist ein SiC-Gehalt (eingestellt durch thermische Vorbehandlung der entsprechenden Gewebelagen) im Kernbereich 142 höher als in den Deckbereichen 144, 146. Dadurch weist auch der Werkstoff, welcher die Kanten 158, 160 ausbildet, einen entsprechend hohen Keramikgehalt auf.

Beispielsweise ist der Kernbereich 152 aus einem C/C-SiC-XD-Werkstoff hergestellt. Die Deckbereiche 144, 146 sind aus einem C/C-SiC-XT- oder C/C-SiC-XB-Werkstoff hergestellt.

Der Flügel 150 läßt sich beispielsweise über eine Platte herstellen, welche mittels dem Legen von Gewebelagen 148 und anschließender Pyrolisierung und Keramisierung hergestellt wird. Aus dieser Platte wird dann der Flügel 150 durch spanabhebende Materialbearbeitung wie Fräsen und Sägen hergestellt.

## Patentansprüche

1. Strahlruder zum Einsatz in Heißgasströmungen (30) mit einem Flügel (44), welcher einen Kernbereich (70; 100; 110) und einen den Kernbereich (70; 100; 110) vollständig umgebenden Deckhautbereich (68; 102; 108) umfaßt, wobei der Deckhautbereich (68; 102; 108) aus einem faserverstärkten Keramikmaterial hergestellt ist, wobei die Fasern (72) im Deckhautbereich parallel zur Flügeloberfläche (64) orientiert sind oder wobei der Deckhautbereich (102; 108) aus einem mit Kurzfasern (104) verstärkten faserverstärkten Kesamikmaterial hergestellt ist, und wobei unterschiedliche Bereiche des Flügels (44), welche unterschiedlichen Belastungen ausgesetzt sind, aus unterschiedlichen, den Belastungen angepaßten Werkstoffen hergestellt sind, wobei Bereiche, welche korrosiv und/oder abrasiv stärker belastet sind, aus einem Werkstoff mit höherem Keramikgehalt im Vergleich zu Bereichen, welche mechanisch stärker belastet sind, hergestellt sind.

2. Strahlruder nach Anspruch 1, **dadurch gekennzeichnet, daß** Bereiche, welche durch eine Heißgasströmung (30) korrosiv und/oder abrasiv belastet sind, aus einem Werkstoff mit im CFK-Zustand niedrigerer Faser-Matrix-Bindung im Vergleich zu Bereichen, welche stärkeren mechanischen Belastungen ausgesetzt sind, hergestellt sind.

3. Strahlruder nach einem der voranstehenden Ansprüche, **gekennzeichnet durch** einen Schaft (46), welcher mit dem Flügel (44) verbunden ist.

4. Strahlruder nach Anspruch 3, **dadurch gekennzeichnet, daß** ein Schaftfortsetzungsbereich (76; 116) in dem Kernbereich (70; 110) des Flügels (44) liegt.

5. Strahlruder nach Anspruch 4, **dadurch gekennzeichnet, daß** der Schaftfortsetzungsbereich (76; 116) symmetrisch zu einer Flügelachse (58) ausgebildet ist.

6. Strahlruder nach einem der Ansprüche 3 bis 5, **dadurch gekennzeichnet, daß** der Schaft (46) aus einem faserverstärkten Werkstoff hergestellt ist.

7. Strahlruder nach Anspruch 6, **dadurch gekennzeichnet, daß** Fasern im Wesentlichen parallel zu einer Schaftlängsachse (48) orientiert sind.

8. Strahlruder nach Anspruch 6 oder 7, **dadurch gekennzeichnet, daß** ein Schaftfortsetzungsbereich (76; 116) aus einem faserverstärkten Werkstoff hergestellt ist.

9. Strahlruder nach Anspruch 8, **dadurch gekennzeichnet, daß** Fasern im Schaftfortsetzungsbereich (76; 116) parallel zu einer Flügelachse (58) orientiert sind.

10. Strahlruder nach einem der vorangehenden Ansprüche, **dadurch gekennzeichnet, daß** die Fasern in dem Deckhautbereich (68; 102; 108) C-Fasern oder SiC-Fasern sind.

11. Strahlruder nach einem der vorangehenden Absprüche, **dadurch gekennzeichnet, daß** der Deckhautbereich (68; 102; 108) aus C/C-SiC oder SiC/SiC hergestellt ist.

12. Strahlruder nach einem der Ansprüche 3 bis 11, **dadurch gekennzeichnet, daß** der Schaft (46) und/oder ein Schaftfortsetzungsbereich (76; 116) aus einem C-Fasern oder SiC-Fasern umfassenden Werkstoff hergestellt sind.

13. Strahlruder nach einem der Ansprüche 3 bis 12, **dadurch gekennzeichnet, daß** der Schaft (46) und/oder ein Schaftfortsetzungsbereich (76; 116) aus einem faserverstärkten Keramikmaterial hergestellt sind.

14. Strahlruder nach Anspruch 12 oder 13, **dadurch gekennzeichnet, daß** die Schaft (46) und/oder ein Schaftfortsetzungsbereich (76) aus C/C-SiC oder SiC/SiC hergestellt sind.

15. Strahlruder nach einem der vorangehenden Ansprüche, **dadurch gekennzeichnet, daß** der Flügel (44) und/oder ein Schaft (46) mit einer Hartstoffbeschichtung versehen sind.

16. Strahlruder nach einem der vorangehenden Ansprüche, **dadurch gekennzeichnet, daß** der Kernbereich (70; 110) einen Schaftfortsetzungsbereich (76; 116) und einen Zwischenbereich (80; 86; 92; 112) umfaßt.

17. Strahlruder nach Anspruch 16, **dadurch gekennzeichnet, daß** der Zwischenbereich (80; 86; 112) einen mit Kurzfasern verstärkten Werkstoff umfaßt.

18. Strahlruder nach Anspruch 16, **dadurch gekennzeichnet, daß** der Zwischenbereich (92) aus einem monolithischen Keramikwerkstoff hergestellt ist.

19. Strahlruder nach einem der vorangehenden Ansprüche, **dadurch gekennzeichnet, daß** der Deckhautbereich (68) mittels Gewebelagen hergestellt ist.

20. Strahlruder nach Anspruch 19, **dadurch gekennzeichnet, daß** die Gewebelagen (74) den Kernbereich (70) umgeben.

21. Strahlruder nach einem der Ansprüche 1 bis 18, **dadurch gekennzeichnet, daß** der Deckhautbereich (102; 108) mittels Kurzfasern (104) hergestellt ist.

22. Strahlruder nach Anspruch 21, **dadurch gekennzeichnet, daß** die Kurzfasern (104) ausgerichtet sind.

23. Strahlruder nach Anspruch 21 oder 22, **dadurch gekennzeichnet, daß** die Kurzfasern (104) parallel zur Flügeloberfläche (64) ausgerichtet sind.

24. Verfahren zur Herstellung eines Strahlruders aus einem mindestens in Teilbereichen faserverstärkten Werkstoff, bei dem ein endkonturnaher Strahlrudervorkörper durch Pressen hergestellt wird, und bei der Pressung ein Deckhautbereich und ein Kernbereich miteinander verpreßt werden, wobei der Deckhautbereich den Kernbereich umgibt und der Deckhautbereich mittels eines faserverstärkten Werkstoffes hergestellt wird, wobei die Fasern parallel zu einer Flügeloberfläche des Strahlruders orientiert sind, der hergestellte Strahlrudervorkörper pyrolisiert und keramisiert wird und wobei unterschiedliche funktionelle Bereiche des Strahlruders mit einem den Erfordernissen des jeweiligen funktionellen Bereichs angepaßten Werkstoff hergestellt werden, wobei entsprechend den Anforderungen für den jeweiligen funktionellen Bereich die Faserorientierung und/oder der Keramikgehalt des entsprechenden Werkstoffs eingestellt wird.

25. Verfahren nach Anspruch 24, **dadurch gekennzeichnet, daß** der keramisierte Strahlrudervorkörper mit einer Hartstoffschicht mindestens teilweise beschichtet wird.

26. Verfahren nach einem der Ansprüche 24 oder 25, **dadurch gekennzeichnet, daß** die Pressung über einen in eine Hohlform eintauchenden Stempel erfolgt.

27. Verfahren nach Anspruch 26, **dadurch gekennzeichnet, daß** die Hohlform und/oder der Stempel entsprechend der zu erzielenden Endkontur des Strahlruders ausgebildet sind.

28. Verfahren nach einem der Ansprüche 24 bis 27, **dadurch gekennzeichnet, daß** die Pressung unter Wärmezufuhr erfolgt.

29. Verfahren nach Anspruch 28, **dadurch gekennzeichnet, daß** ein Stempel beheizt wird.

30. Verfahren nach Anspruch 28 oder 29, **dadurch gekennzeichnet, daß** eine Hohlform beheizt wird.

31. Verfahren nach einem der Ansprüche 24 bis 30, **dadurch gekennzeichnet, daß** nach der Pressung ein Erhitzungsvorgang des Werkstücks durchgeführt wird.

32. Verfahren nach einem der Ansprüche 24 bis 31, **dadurch gekennzeichnet, daß** der Deckhautbereich mittels Gewebelagen hergestellt wird.

33. Verfahren nach einem der Ansprüche 24 bis 32, **dadurch gekennzeichnet, daß** der Deckhautbereich über einen mit Kurzfasern verstärkten faserverstärkten Werkstoff hergestellt wird.

34. Verfahren nach einem der Ansprüche 24 bis 33, **dadurch gekennzeichnet, daß** ein Schaft aus unidirektionalen Fasern oder Gewebelagen hergestellt wird.

35. Verfahren nach Anspruch 34, **dadurch gekennzeichnet, daß** ein Schaftfortsetzungsbereich in einem Kernbereich hergestellt wird.

36. Verfahren nach Anspruch 35, **dadurch gekennzeichnet, daß** der Schaftfortsetzungsbereich aus unidirektionalen Fasern oder Gewebelagen hergestellt wird.

37. Verfahren nach einem der Ansprüche 34 bis 36, **dadurch gekennzeichnet, daß** Fasern im Schaft und/oder Schaftfortsetzungsbereich im wesentlichen parallel zu einer Schaftlängsachse ausgerichtet werden.

38. Verfahren nach einem der Ansprüche 24 bis 37, **dadurch gekennzeichnet, daß** in dem Kernbereich ein Zwischenbereich hergestellt wird.

39. Verfahren nach Anspruch 38, **dadurch gekennzeichnet, daß** der Zwischenbereich aus einem mit Kurzfasern verstärkten faserverstärkten Werkstoff hergestellt wird.

40. Verfahren nach Anspruch 38, **dadurch gekennzeichnet, daß** der Zwischenbereich aus einem monolithischen Keramikwerkstoff hergestellt wird.

## Claims

1. Jet vane for use in streams of hot gas (30) with a wing (44) comprising a core area (70; 100; 110) and a cover skin area (68; 102; 108) completely surrounding the core area (70; 100; 110), the cover skin area (68; 102; 108) being made of a fibre-reinforced ceramic material, the fibres (72) in the cover skin area being orientated parallel to the wing surface (64), or the cover skin area (102; 108) being made of a fibre-reinforced ceramic material that is reinforced with short fibres (104), and different areas of the wing (44) that are exposed to different strains being made from different materials that are adapted to the strains, areas that are corrosively and/or abrasively strained to a greater extent being made of a material with a higher ceramic content in comparison with areas that are exposed to higher mechanical strains.

2. Jet vane in accordance with claim 1, **characterized in that** areas that are corrosively and/or abrasively strained by a stream of hot gas (30) are made of a material with a weaker fibre-matrix bond in the carbon fibre-reinforced plastic state in comparison with areas that are exposed to higher mechanical strains.

3. Jet vane in accordance with any one of the preceding claims, **characterized by** a shaft (46) which is connected to the wing (44).

4. Jet vane in accordance with claim 3, **characterized in that** a shaft continuation area (76; 116) is located in the core area (70; 110) of the wing (44).

5. Jet vane in accordance with claim 4, **characterized in that** the shaft continuation area (76; 116) is formed symmetrically in relation to a wing axis (58).

6. Jet vane in accordance with any one of claims 3 to 5, **characterized in that** the shaft (46) is made of a fibre-reinforced material.

7. Jet vane in accordance with claim 6, **characterized in that** fibres are orientated substantially parallel to a longitudinal axis (48) of the shaft.

8. Jet vane in accordance with claim 6 or 7, **characterized in that** a shaft continuation area (76; 116) is made of a fibre-reinforced material.

9. Jet vane in accordance with claim 8, **characterized in that** fibres in the shaft continuation area (76; 116) are orientated parallel to a wing axis (58).

10. Jet vane in accordance with any one of the preceding claims, **characterized in that** the fibres in the cover skin area (68; 102; 108) are C fibres or SiC fibres.

11. Jet vane in accordance with any one of the preceding claims, **characterized in that** the cover skin area (68; 102; 108) is made of C/C-SiC or SiC/SiC.

12. Jet vane in accordance with any one of claims 3 to 11, **characterized in that** the shaft (46) and/or a shaft continuation area (76; 116) is/are made of a material comprising C fibres or SiC fibres.

13. Jet vane in accordance with any one of claims 3 to 12, **characterized in that** the shaft (46) and/or a shaft continuation area (76; 116) is/are made of a fibre-reinforced ceramic material.

14. Jet vane in accordance with claim 12 or 13, **characterized in that** the shaft (46) and/or a shaft continuation area (76) is/are made of C/C-SiC or SiC/SiC.

15. Jet vane in accordance with any one of the preceding claims, **characterized in that** the wing (44) and/or a shaft (46) is/are provided with a coating of hard material.

16. Jet vane in accordance with any one of the preceding claims, **characterized in that** the core area (70; 110) comprises a shaft continuation area (76; 116) and an intermediate area (80; 86; 92; 112).

17. Jet vane in accordance with claim 16, **characterized in that** the intermediate area (80; 86; 112) comprises a material reinforced with short fibres.

18. Jet vane in accordance with claim 16, **characterized in that** the intermediate area (92) is made of a monolithic ceramic material.

19. Jet vane in accordance with any one of the preceding claims, **characterized in that** the cover skin area (68) is produced using fabric layers.

20. Jet vane in accordance with claim 19, **characterized in that** the fabric layers (74) surround the core area (70).

21. Jet vane in accordance with any one of claims 1 to 18, **characterized in that** the cover skin area (102; 108) is produced by short fibres (104).

22. Jet vane in accordance with claim 21, **characterized in that** the short fibres (104) are aligned.

23. Jet vane in accordance with claim 21 or 22, **characterized in that** the short fibres (104) are aligned parallel to the wing surface (64).

24. Method for manufacturing a jet vane made of a material that is fibre-reinforced in at least partial areas thereof, wherein a jet vane preform with a near net shape is produced by pressing, and during the pressing a cover skin area and a core area are pressed together, wherein the cover skin area surrounds the core area, and the cover skin area is produced by a fibre-reinforced material, wherein the fibres are orientated parallel to a wing surface of the jet vane, wherein the produced jet vane preform is pyrolyzed and ceramized, wherein different functional areas of the jet vane are produced with a material that is adapted to the requirements of the respective functional area, and wherein the fibre orientation and/or the ceramic content of the corresponding material is/are set in accordance with the requirements for the respective functional area.

25. Method in accordance with claim 24, **characterized in that** the ceramized jet vane preform is at least partially coated with a layer of hard material.

26. Method in accordance with claim 24 or 25, **characterized in that** the pressing is carried out by means of a stamp entering a hollow mould.

27. Method in accordance with claim 26, **characterized in that** the hollow mould and/or the stamp is/are configured to correspond to the final shape of the jet vane to be produced.

28. Method in accordance with any one of claims 24 to 27, **characterized in that** the pressing is carried out while heat is supplied.

29. Method in accordance with claim 28, **characterized in that** a stamp is heated.

30. Method in accordance with claim 28 or 29, **characterized in that** a hollow mould is heated.

31. Method in accordance with any one of claims 24 to 30, **characterized in that** a heating operation is carried out on the workpiece after the pressing.

32. Method in accordance with any one of claims 24 to 31, **characterized in that** the cover skin area is produced using fabric layers.

33. Method in accordance with any one of claims 24 to 32, **characterized in that** the cover skin area is produced by a fibre-reinforced material that is reinforced with short fibres.

34. Method in accordance with any one of claims 24 to 33, **characterized in that** a shaft is made of unidirectional fibres or fabric layers.

35. Method in accordance with claim 34, **characterized in that** a shaft continuation area is produced in a core area.

36. Method in accordance with claim 35, **characterized in that** the shaft continuation area is made of unidirectional fibres or fabric layers.

37. Method in accordance with any one of claims 34 to 36, **characterized in that** fibres in the shaft and/or the shaft continuation area are aligned substantially parallel to a longitudinal axis of the shaft.

38. Method in accordance with any one of claims 24 to 37, **characterized in that** an intermediate area is produced in the core area.

39. Method in accordance with claim 38, **characterized in that** the intermediate area is made of a fibre-reinforced material that is reinforced with short fibres.

40. Method in accordance with claim 38, **characterized in that** the intermediate area is made of a monolithic ceramic material.

## Revendications

1. Déviateur de jet destiné à être utilisé dans des flux de gaz chaud (30) et comprenant une aile (44) présentant une zone centrale (70 ; 100 ; 110) et une zone d'enveloppe (68 ; 102 ; 108) entourant entièrement la zone centrale (70 ; 100 ; 110), la zone d'enveloppe (68 ; 102 ; 108) étant constituée d'un matériau céramique renforcé par des fibres, les fibres (72) dans la zone d'enveloppe étant orientées sensiblement parallèlement à la surface de l'aile (64) ou la zone d'enveloppe (102 ; 108) étant constituée d'un matériau céramique renforcé par des fibres courtes (104), et différentes zones de l'aile (44) exposées à différentes sollicitations étant constituées de différents matériaux adaptés aux sollicitations, des zones sollicitées plus fortement par une corrosion et/ou une abrasion étant constituées d'un matériau présentant une teneur en céramique supérieure à celle des zones sollicitées plus fortement mécaniquement.

2. Déviateur de jet selon la revendication 1, **caractérisé en ce que** les zones sollicitées par corrosion et/ou abrasion par un flux de gaz chaud (30) sont constituées d'un matériau doté d'une liaison fibre-matrice plus faible dans l'état CFC en comparaison des zones exposées à des sollicitations mécaniques plus fortes.

3. Déviateur de jet selon l'une quelconque des revendications précédentes, **caractérisé par** une tige (46) reliée à l'aile (44).

4. Déviateur de jet selon la revendication 3, **caractérisé en ce qu'**une zone de prolongement de tige (76 ; 116) se situe dans la zone centrale (70 ; 110) de l'aile (44).

5. Déviateur de jet selon la revendication 4, **caractérisé en ce que** la zone de prolongement de tige (76 ; 116) est conçue symétriquement à un axe d'aile (58).

6. Déviateur de jet selon l'une quelconque des revendications 3 à 5, **caractérisé en ce que** la tige (46) est constituée d'un matériau renforcé par des fibres.

7. Déviateur de jet selon la revendication 6, **caractérisé en ce que** les fibres sont orientées sensiblement parallèlement à un axe longitudinal de tige (48).

8. Déviateur de jet selon la revendication 6 ou 7, **caractérisé en ce qu'**une zone de prolongement de tige (76 ; 116) est constituée d'un matériau renforcé par des fibres.

9. Déviateur de jet selon la revendication 8, **caractérisé en ce que** les fibres dans la zone de prolongement de tige (76 ; 116) sont orientées parallèlement à un axe d'aile (58).

10. Déviateur de jet selon l'une quelconque des revendications précédentes, **caractérisé en ce que** les fibres dans la zone d'enveloppe (68 ; 102 ; 108) sont des fibres C ou des fibres SiC.

11. Déviateur de jet selon l'une quelconque des revendications précédentes, **caractérisé en ce que** la zone d'enveloppe (68 ; 102 ; 108) est constituée de C/C-Sic ou de SiC/SiC.

12. Déviateur de jet selon l'une quelconque des revendications 3 à 11, **caractérisé en ce que** la tige (46) et/ou une zone de prolongement de tige (76 ; 116) sont constituées d'un matériau comprenant des fibres C ou des fibres SiC.

13. Déviateur de jet selon l'une quelconque des revendications 3 à 12, **caractérisé en ce que** la tige (46) et/ou une zone de prolongement de tige 76 ; 116) sont constituées d'un matériau céramique renforcé par des fibres.

14. Déviateur selon la revendication 12 ou 13, **caractérisé en ce que** la tige (46) et/ou une zone de prolongement de tige (76) sont constituées de C/C-SiC ou de SiC/SiC.

15. Déviateur de jet selon l'une quelconque des revendications précédentes, **caractérisé en ce que** l'aile (44) et/ou une tige (46) sont pourvues d'un revêtement de substance dure.

16. Déviateur de jet selon l'une quelconque des revendications précédentes, **caractérisé en ce que** la zone centrale (70 ; 110) comprend une zone de prolongement de tige (76 ; 116) et une zone intermédiaire (80 ; 86 ; 92 ; 112).

17. Déviateur de jet selon la revendication 16, **caractérisé en ce que** la zone intermédiaire (80 ; 86 ; 112) comprend un matériau renforcé par des fibres courtes.

18. Déviateur de jet selon la revendication 16, **caractérisé en ce que** la zone intermédiaire (92) est constituée d'un matériau céramique monolithique.

19. Déviateur de jet selon l'une quelconque des revendications précédentes, **caractérisé en ce que** la zone d'enveloppe (68) est fabriquée au moyen de couches de tissu.

20. Déviateur de jet selon la revendication 19, **caractérisé en ce que** les couches de tissu (74) entourent la zone centrale (70).

21. Déviateur de jet selon l'une quelconque des revendications là 18, **caractérisé en ce que** la zone d'enveloppe (102 ; 108) est fabriquée au moyen de fibres courtes (104).

22. Déviateur de jet selon la revendication 21, **caractérisé en ce que** les fibres courtes (104) sont orientées.

23. Déviateur de jet selon la revendication 21 ou 22, **caractérisé en ce que** les fibres courtes (104) sont orientées parallèlement à la surface de l'aile (64).

24. Procédé de fabrication d'un déviateur de jet à partir d'un matériau renforcé par des fibres au moins dans des zones partielles, selon lequel une préforme de déviateur de jet proche du contour final est fabriquée par compression, et au cours de la compression, une zone d'enveloppe et une zone centrale sont comprimées ensemble, la zone d'enveloppe entourant la zone centrale et la zone d'enveloppe étant fabriquée au moyen d'un matériau renforcé par des fibres, les fibres étant orientées parallèlement à une surface d'aile du déviateur de jet, la préforme fabriquée de déviateur de jet étant pyrolisée et céramisée et différentes zones fonctionnelles du déviateur de jet étant fabriquées avec un matériau adapté aux exigences de la zone fonctionnelle respective, l'orientation des fibres et/ou la teneur en céramique du matériau correspondant étant réglées en fonction des exigences pour la zone fonctionnelle respective.

25. Procédé selon la revendication 24, **caractérisé en ce que** la préforme céramisée de déviateur de jet est revêtue au moins en partie d'une couche de substance dure.

26. Procédé selon l'une quelconque des revendications 24 ou 25, **caractérisé en ce que** la compression s'effectue par l'intermédiaire d'un poinçon s'enfonçant dans un moule creux.

27. Procédé selon la revendication 26, **caractérisé en ce que** le moule creux et/ou le poinçon sont conçus en fonction du contour final à obtenir du déviateur de jet.

28. Procédé selon l'une quelconque des revendications 24 à 27, **caractérisé en ce que** la compression s'effectue en même temps qu'un apport de chaleur.

29. Procédé selon la revendication 28, **caractérisé en ce qu'**un poinçon est chauffé.

30. Procédé selon la revendication 28 ou 29, **caractérisé en ce qu'**un moule creux est chauffé.

31. Procédé selon l'une quelconque des revendications 24 à 30, **caractérisé en ce qu'**un processus de chauffage de la pièce est réalisé après la compression.

32. Procédé selon l'une quelconque des revendications 24 à 31, **caractérisé en ce que** la zone d'enveloppe est fabriquée au moyen de couches de tissu.

33. Procédé selon l'une quelconque des revendications 24 à 32, **caractérisé en ce que** la zone d'enveloppe est fabriquée par l'intermédiaire d'un matériau renforcé par des fibres courtes.

34. Procédé selon l'une quelconque des revendications 24 à 33, **caractérisé en ce qu'**une tige est fabriquée à partir de fibres ou de couches de tissu unidirectionnelles.

35. Procédé selon la revendication 34, **caractérisé en ce qu'**une zone de prolongement de tige est fabriquée dans une zone centrale.

36. Procédé selon la revendication 35, **caractérisé en ce que** la zone de prolongement de tige est fabriquée à partir de fibres ou de couches de tissu unidirectionnelles.

37. Procédé selon l'une quelconque des revendications 34 à 36, **caractérisé en ce que** les fibres dans la tige et/ou dans la zone de prolongement de tige sont orientées sensiblement parallèlement à un axe longitudinal de tige.

38. Procédé selon l'une quelconque des revendications 24 à 37, **caractérisé en ce qu'**une zone intermédiaire est fabriquée dans la zone centrale.

39. Procédé selon la revendication 38, **caractérisé en ce que** la zone intermédiaire est constituée d'un matériau renforcé par des fibres courtes.

40. Procédé selon la revendication 38, **caractérisé en ce que** la zone intermédiaire est fabriquée à partir d'un matériau céramique monolithique.
